Europäisches Patentamt

(19) European Patent Office

Office européen des brevets

(11) Numéro de publication : **0 115 729**
**B1**

(12) **FASCICULE DE BREVET EUROPÉEN**

(45) Date de publication du fascicule du brevet :
29.07.87

(51) Int. Cl.⁴ : **B 01 D 35/20**, B 01 D 29/28

(21) Numéro de dépôt : 83402517.3

(22) Date de dépôt : 22.12.83

(54) **Procédé et dispositif de filtration.**

(30) Priorité : 30.12.82 FR 8222061

(43) Date de publication de la demande :
15.08.84 Bulletin 84/33

(45) Mention de la délivrance du brevet :
29.07.87 Bulletin 87/31

(84) Etats contractants désignés :
BE DE GB IT

(56) Documents cités :
DE-C- 129 943
FR-A- 2 070 242
FR-A- 2 128 967
FR-A- 2 178 064
US-A- 2 278 729
US-A- 3 870 638

(73) Titulaire : **Etablissement public dit: CHARBONNAGES**
**DE FRANCE**
**9, Avenue Percier**
**F-75008 Paris (FR)**

(72) Inventeur : **Daniel, Jean-Louis**
**36 Chemin de la Procession Aumont**
**F-60300 Senlis (FR)**
Inventeur : **Lecuru, Régis**
**1 Bis Boulevard de la république**
**F-60870 Villers Saint Paul (FR)**

(74) Mandataire : **Rinuy, Santarelli**
**14, avenue de la Grande Armée**
**F-75017 Paris (FR)**

## Description

La présente invention concerne un procédé et un dispositif de filtration.

Il est connu de séparer des particules d'un solide en suspension dans un liquide par passage de ladite suspension sur une toile. Selon la nature et la dimension des particules solides, un colmatage plus ou moins rapide de la toile peut se produire. On observe en particulier ce phénomène lors de la filtration de suspensions aqueuses de particules de charbon qui contiennent des matières argileuses. Ces matières argileuses provoquent après un temps plus ou moins long le colmatage du filtre.

Pour remédier à cet inconvénient il est connu, par exemple de US-A-3 870 638, d'imprimer des vibrations à la suspension en cours de filtration. La présente invention a pour but de perfectionner un tel procédé.

Elle concerne donc un procédé de séparation d'un solide d'avec un liquide dans lequel il est en suspension, par filtration, suivant lequel on imprime des vibrations à la suspension en cours de filtration, caractérisé en ce que lesdites vibrations sont engendrées en utilisant l'énergie produite par l'écoulement du liquide filtré.

La suspension à filtrer peut être constituée d'un solide et d'un liquide quelconques. En particulier le liquide peut être l'eau et le solide peut être constitué de particules de charbon.

Avantageusement les vibrations sont de faible amplitude et de fréquence relativement élevée. Par exemple on peut utiliser une amplitude comprise entre 0,1 et 5 mm et une fréquence comprise entre 100 et 5 000 pulsations par minute.

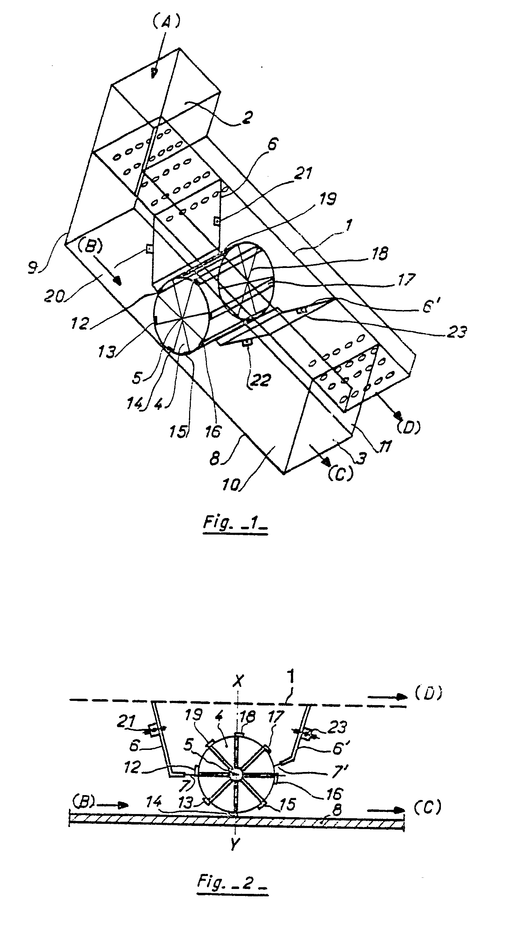

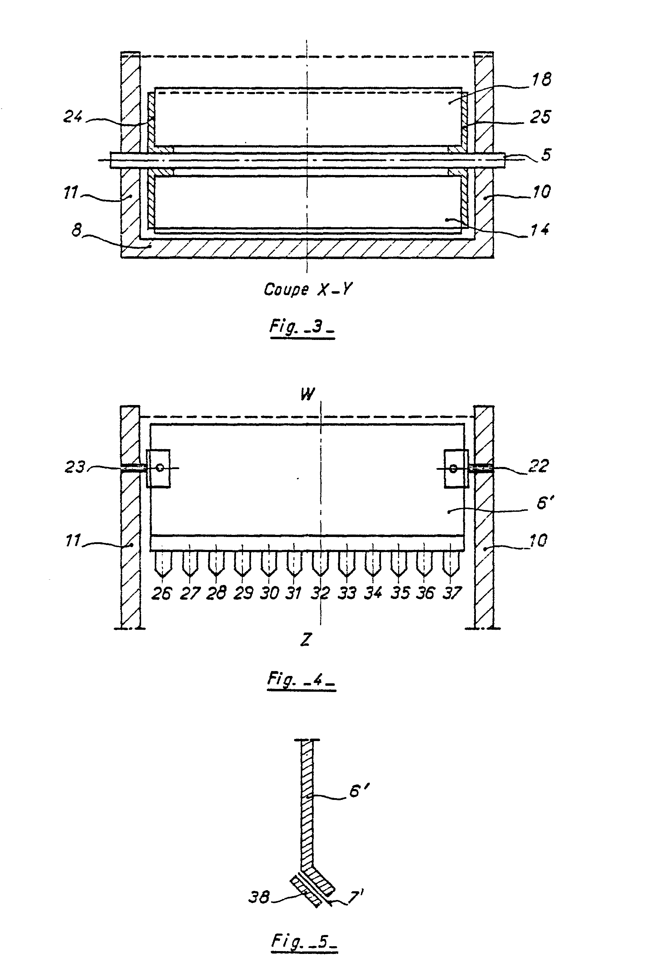

L'invention concerne également un dispositif illustré par les figures 1 à 5 pour la mise en œuvre du procédé ci-dessus, comprenant un filtre (1), un dispositif d'alimentation (2) situé à une extrémité du filtre (1), un dispositif de réception (3) du liquide filtré, caractérisé en ce que au moins une roue à aubes (4) comportant un axe de rotation (5) est disposée transversalement à l'intérieur dudit dispositif de réception (3) et de manière à être entraînée par le liquide filtré, et en ce que au moins une plaque (6) est associée à chaque roue à aubes (4) et est disposée dans ledit dispositif de réception (3) de façon telle que l'une de ses extrémités soit au voisinage immédiat du filtre (1) et que son autre extrémité soit en contact avec chaque pale d'une roue à aubes (4) au cours de la rotation de celle-ci.

Le filtre (1) est constitué d'une plaque perforée ou d'une toile plane ou incurvée qui peut être en un matériau quelconque, adapté au problème à résoudre, par exemple en un matériau synthétique. Avantageusement le filtre est constitué d'une toile souple en tissu synthétique soutenue par une toile métallique ayant des mailles plus larges que celles de la toile souple. Les mailles du filtre ont une dimension en rapport avec la dimension des particules à filtrer. Dans le cas particulier de la filtration des suspensions de charbon, les mailles sont avantageusement carrées et ont, par exemple, une ouverture de 200 microns ; ainsi les particules de dimension inférieure à 200 microns sont entraînées par l'eau de filtration.

Le dispositif de réception (3) du liquide filtré constitue une cuve de forme généralement parallélépipèdique comprenant un fond (paroi inférieure) (8), une extrémité fermée (9) du côté où se trouve situé le dispositif d'alimentation (2), deux parois latérales (10) et (11). Le filtre (1) constitue la paroi supérieure du dispositif de réception (3).

Une roue à aubes (4) comprend un axe de rotation (5) dont chaque extrémité peut tourner librement dans un orifice pratiqué dans chaque paroi latérale du dispositif de réception (3). L'axe de rotation (5) est donc perpendiculaire à chacune des parois latérales (10) et (11), et parallèle d'une part au fond du dispositif de réception (3) et d'autre part au filtre (1). La roue à aubes comprend d'autre part des pales solidaires de l'axe de rotation, dont l'extrémité libre est avantageusement recourbée. De préférence le plan de la partie recourbée est perpendiculaire au plan principal de la pale. Les pales sont avantageusement diamétralement opposées deux par deux ; leur nombre est avantageusement compris entre 6 et 12. La longueur de la roue à aubes (4) est, avantageusement, sensiblement égale à la largeur du dispositif de réception (3). Chaque extrémité de la roue à aubes est constituée avantageusement par un flasque et la distance séparant ledit flasque de la paroi latérale du dispositif de réception (3) située à proximité est, par exemple, de l'ordre de 1 à 1,5 cm.

Avantageusement la plaque (6) est une plaque métallique. L'extrémité d'une plaque (6), située au voisinage immédiat du filtre (1) est avantageusement en contact avec ledit filtre. La distance séparant l'extrémité de la plaque et le filtre n'est pas supérieure à l'amplitude des vibrations.

L'autre extrémité de la plaque (6) vient au contact, successivement, de chaque pale de la roue à aubes (4) au cours de la rotation de celle-ci. La plaque (6) a une longueur avantageusement égale à la largeur du dispositif de réception (3) et est fixée à chacune des parois latérales (10) et (11) dudit dispositif de réception au moyen de pattes de fixation (20) et (21).

De façon à générer dans la plaque (6) des vibrations qui seront transmises au filtre (1), par contact de l'extrémité libre des pales de la roue à aubes avec l'extrémité de la plaque (6), venant au contact desdites pales, cette extrémité de la plaque (6), est constituée ou munie, avantageusement sur toute sa longueur, d'une feuille (7) en matériau rigide et élastique telle qu'une feuille d'acier de faible épaisseur ou du clinquant de cuivre. Un bord de ladite feuille est solidaire de l'extrémité de la plaque (6), l'autre bord est libre.

Avantageusement le bord libre de la feuille (7) est découpé de façon à former des dents. La feuille (7) ainsi découpée forme alors un peigne de contact dont l'extrémité des dents est frappée par chacune des extrémités des pales de la roue à aubes (4). Les vibrations ainsi générées sont transmises à l'extrémité de la plaque située au voisinage immédiat du filtre et sont communiquées à ce dernier. Le peigne peut aussi être constitué d'une pluralité de dents, chacune étant fixée séparément à l'extrémité de la plaque (6).

Avantageusement le peigne de contact forme un plan qui est confondu avec le plan formé par l'axe de rotation (5) de la roue à aubes (4) et une pale de la roue à aubes (4) lorsque l'extrémité de ladite pale vient au contact dudit peigne.

Chacune des plaques (6) peut être plane et disposée dans le dispositif de réception (3) de façon à ce que son plan soit confondu avec le plan d'au moins une pale de la roue à aubes (4).

Avantageusement on associe deux plaques (6) et (6') à chaque roue à aubes (4). Une première plaque (6) est avantageusement courbée à son extrémité située au voisinage de la roue à aubes (4) de façon que le peigne de contact soit dans le plan de la pale de la roue à aubes qui vient à son contact, et soit parallèle à la paroi inférieure (8) du dispositif de réception (3).

L'extrémité de la même plaque (6) au voisinage du filtre forme avec le plan de celui-ci un angle qui peut être compris entre 60 et 90°.

Avantageusement les plaques métalliques (6) et (6') sont situées de part et d'autre de la roue à aubes (4) et l'extrémité de la seconde plaque (6') au voisinage de ladite roue à aubes (4) est située à égale distance entre deux pales de la roue à aubes (4) lorsque l'extrémité de la plaque (6) est au contact d'une pale de la roue à aubes (4). Ladite extrémité de la plaque (6') est avantageusement recourbée de façon que le peigne de contact qu'elle comporte soit situé dans le plan de l'axe de rotation (5) de la roue à aubes (4) et de la pale venant à son contact. L'autre extrémité de la plaque (6') est avantageusement perpendiculaire au filtre (1).

Avantageusement les extrémités des plaques (6) et (6') situées à proximité du filtre (1) sont biseautées.

Le dispositif selon l'invention est mis en place en faisant avec l'horizontale un angle plus ou moins grand selon la vitesse que l'on souhaite donner à l'eau filtrée, donc la vitesse de rotation que l'on veut imprimer à la roue à aubes. Plus cette vitesse de rotation est élevée, plus la fréquence des vibrations transmises au filtre est élevée. Il est également possible, dans le but d'augmenter la vitesse de l'eau de filtration, de disposer un goulot en amont de la roue à aubes.

Une réalisation particulière, non limitative, du dispositif selon l'invention sera maintenant décrite de façon détaillée à l'aide des figures en annexe. Il concerne particulièrement une installation de filtration comprenant une seule roue à aubes et deux plaques métalliques.

La figure 1 est une vue schématique en perspective du dispositif comprenant un filtre (1), un dispositif d'alimentation (2) par lequel est admise la suspension (A), un dispositif de réception (3) comprenant un fond (8), une extrémité fermée (9), 2 parois latérales (10) et (11), une roue à aubes (4) comprenant un axe de rotation (5) et des pales (12) à (19), une première plaque métallique (6) fixée aux parois latérales (10) et (11) en deux points (20) et (21) au moyen de 2 pattes munies d'écrous, une seconde plaque métallique (6') fixée aux mêmes parois latérales aux points (22) et (23). L'eau ayant filtré dès le début du passage de la suspension sur le filtre (1) forme un flux moteur (B) qui met en mouvement la roue à aubes (4). Cette eau est ensuite rejetée en (C). Le refus du filtre est recueilli en (D).

La figure 2 représente une coupe longitudinale partielle du dispositif selon l'invention. Les repères ont la même signification que ci-dessus. On remarque en outre les peignes (7) et (7') associés respectivement aux extrémités des plaques (6) et (6').

La figure 3 est une coupe transversale selon XY sur laquelle on remarque les flasques (24) et (25) solidaires de l'axe de rotation (5) et maintenant les pales.

La figure 4 est une vue de face de la plaque métallique (6'), vue depuis l'autre plaque (6), la roue à aubes (4) étant enlevée. On y remarque les dents de peigne en clinquant (26) à (37) et les deux dispositifs de fixation (22) et (23) de la plaque (6') aux parois latérales (10) et (11).

La figure 5 est une coupe WZ de la plaque (6') montrant la disposition particulière du peigne (7') serré entre l'extrémité de la plaque (6') et une plaque support (38). Le serrage peut être obtenu par tout moyen connu, en particulier par vissage.

Le dispositif fonctionne de la façon suivante. Le flux d'eau de filtration (B), venant frapper successivement chaque pale (12) à (19) lorsqu'elle se trouve à son point le plus bas, met la roue à aubes (4) en rotation autour de son axe (5). Une pale (12) frappe le peigne (7) puis une autre pale (16) frappe le peigne (7'), et ainsi de suite, engendrant des vibrations dans chacune des plaques (6) et (6'), vibrations qui sont transmises au filtre (1).

Le dispositif selon l'invention est particulièrement intéressant pour filtrer les suspensions aqueuses de charbon contenant de l'argile. Le décolmatage s'effectue au fur et à mesure que le refus progresse sur le filtre (1). Ce décolmatage est facilité par les projections, sous le filtre (1), de gouttelettes d'eau par les pales de la roue à aubes.

Ce dispositif est particulièrement simple et son fonctionnement est autonome puisqu'aucun apport extérieur d'énergie n'est nécessaire.

## Revendications

1. Procédé de séparation d'un solide d'avec un liquide dans lequel il est en suspension, par filtration, suivant lequel on imprime des vibrations à la suspension en cours de filtration caractérisé en ce que lesdites vibrations sont engendrées en utilisant l'énergie produite par l'écoulement du liquide filtré.

2. Procédé selon la revendication 1, caractérisé en ce que les vibrations sont de faible amplitude et de fréquence élevée.

3. Procédé selon l'une des revendications 1 et 2, caractérisé en ce que l'amplitude des vibrations est comprise entre 0,1 et 5 mm et la fréquence des vibrations est comprise entre 100 et 5 000 pulsations par minute.

4. Dispositif pour la séparation d'un solide d'avec un liquide dans lequel il est en suspension comprenant un filtre (1), un dispositif d'alimentation (2) situé à une extrémité du filtre (1), un dispositif de réception (3) du liquide filtré, caractérisé en ce que au moins une roue à aubes (4) comportant un axe de rotation (5) est disposée transversalement à l'intérieur dudit dispositif de réception (3) de manière à être entraînée par le liquide filtré et en ce que au moins une plaque (6) est associée à chaque roue à aubes (4) et est disposée dans ledit dispositif de réception (3) de façon telle que l'une de ses extrémités soit au voisinage immédiat du filtre (1) et que son autre extrémité soit en contact avec chaque pale d'une roue à aubes (4) au cours de la rotation de celle-ci.

5. Dispositif selon la revendication 4, caractérisé en ce que la longueur de la roue à aubes (4) est sensiblement égale à la largeur du dispositif de réception (3).

6. Dispositif selon l'une des revendications 4 et 5, caractérisé en ce que l'extrémité de la plaque (6) en contact avec chaque pale de la roue à aubes (4) est munie de dents constituant un peigne de contact (7).

7. Dispositif selon la revendication 6, caractérisé en ce que le peigne de contact forme un plan qui est confondu avec le plan formé par l'axe de rotation (5) de la roue à aubes (4) et une pale de la roue à aubes (4) lorsque l'extrémité de ladite pale vient au contact dudit peigne.

8. Dispositif selon l'une des revendications 4 à 7, caractérisé en ce qu'il comprend deux plaques (6) et (6') disposées de façon telle que leurs extrémités venant au contact avec les pales de la roue à aubes (4) soient successivement heurtées par les extrémités des pales de ladite roue à aubes (4).

9. Dispositif selon la revendication 8, caractérisé en ce que, lorsque l'extrémité d'une plaque (6) est au contact d'une pale de la roue à aubes, l'extrémité venant au contact avec les pales de la roue à aubes de l'autre plaque (6') est située à égale distance entre deux pales de ladite route à aubes (4).

10. Dispositif selon l'une des revendications 8 et 9, caractérisé en ce que les extrémités des plaques (6) et (6') venant au contact avec les pales de la roue à aubes (4) sont situées de part et d'autre de ladite roue à aubes (4).

11. Dispositif selon l'une des revendications 4 et 10, caractérisé en ce qu'il comprend en outre un goulot en amont de la roue à aubes (4).

12. Dispositif selon l'une des revendications 4 à 11, caractérisé en ce que le filtre (1) est constitué d'une toile souple en tissu synthétique soutenue par une toile métallique ayant des mailles plus larges que celles de la toile souple.

13. Application du procédé selon l'une des revendications 1 à 3 et du dispositif selon l'une des revendications 4 à 12 à la filtration de suspensions aqueuses de charbon.

**Claims**

1. Process for separating a solid from a liquid in which it is suspended, by filtering, according to which vibrations are applied to the suspension during filtration, characterized in that the said vibrations are generated by using the energy produced by the flow of the filtered liquid.

2. Process according to Claim 1, characterized in that the vibrations are of low amplitude and of high frequency.

3. Process according to one of Claims 1 and 2, characterized in that the amplitude of the vibrations is between 0.1 and 5 mm and the frequency of the vibrations is between 100 and 5,000 pulses per minute.

4. Device for separating a solid from a liquid in which it is suspended comprising a filter (1), a feeding device (2) situated at one end of the filter (1), a device for receiving (3) the filtered liquid, characterized in that at least one paddle wheel (4) comprising an axis of rotation (5) is arranged transversely inside the said receiving device (3) so as to be driven by the filtered liquid and in that at least one plate (6) is associated with each paddle wheel (4) and is arranged in the said receiving device (3) so that one of its ends is in the immediate vicinity of the filter (1) and that its other end is in contact with each vane of a paddle wheel (4) when the latter is rotating.

5. Device according to Claim 4, characterized in that the length of the paddle wheel (4) is substantially equal to the width of the receiving device (3).

6. Device according to one of Claims 4 and 5, characterized in that the end of the plate (6) in contact with each vane of the paddle wheel (4) is provided with teeth forming a contact comb (7).

7. Device according to Claim 6, characterized in that the contact comb forms a plane which is coincident with the plane formed by the axis of rotation (5) of the paddle wheel (4) and a vane of the paddle wheel (4) when the end of the said vane comes into contact with the said comb.

8. Device according to one of Claims 4 to 7, characterized in that it comprises two plates (6) and (6') arranged so that their ends which come into contact with the vanes of the paddle wheel (4) are hit successively by the ends of the vanes of the said paddle wheel (4).

9. Device according to Claim 8, characterized in that, when the end of a plate (6) is in contact with a vane of the paddle wheel, the end coming into contact with the vanes of the paddle wheel of the other plate (6') is situated at an equal distance between two vanes of the said paddle wheel (4).

10. Device according to one of Claims 8 and 9, characterized in that the ends of the plates (6) and (6') coming into contact with the vanes of the paddle wheel (4) are situated on each side of the said paddle wheel (4).

11. Device according to one of Claims 4 and 10, characterized in that it additionally comprises a throat upstream of the paddle wheel (4).

12. Device according to one of Claims 4 to 11, characterized in that the filter (1) consists of a supple sheet of synthetic cloth supported by a metal sheet having meshes which are wider than those of the supple sheet.

13. Application of the process according to one of Claims 1 to 3 and of the device according to one of Claims 4 to 12 to the filtration of aqueous coal suspensions.


**Patentansprüche**

1. Verfahren zur Trennung eines Feststoffs von einer Flüssigkeit durch Filtration, in der er in Suspension ist, nach dem man während der Filtration Vibrationen auf die Suspension aufbringt, dadurch gekennzeichnet, daß die Vibrationen durch Nutzung der durch das Strömen der filtrierten Flüssigkeit bewirken Energie erzeugt werden.

2. Verfahren nach Anspruch 1, dadurch gekennzeichnet, daß die Vibrationen geringe Amplitude und hohe Frequenz aufweisen.

3. Verfahren nach einem der Ansprüche 1 und 2, dadurch gekennzeichnet, daß die Amplitude der Vibrationen zwischen 0,1 mm und 5 mm liegt und die Frequenz der Vibrationen zwischen 100 und 5000 Schwingungen pro Minute liegt.

4. Vorrichtung zur Trennung eines Feststoffes von einer Flüssigkeit, in der er in Suspension ist, mit einem Filter (1), einer Speisevorrichtung (2), die an einem Ende des Filters (1) angeordnet ist, einer Aufnahmevorrichtung (3) für die filtrierte Flüssigkeit, dadurch gekennzeichnet, daß mindestens ein Schaufelrad (4) mit einer Rotationsachse (5) quer im Inneren der Aufnahmevorrichtung (3) derart angeordnet ist, daß es durch die filtrierte Flüssigkeit angetrieben wird, und daß jedem Schaufelrad (4) mindestens eine Platte zugeordnet und innerhalb der Aufnahmevorrichtung (3) so angeordnet ist, daß eines ihrer Enden in der unmittelbaren Nachbarschaft des Filters (1) liegt und daß ihr anderes Ende während der Rotation des Schaufelrades mit jedem Schaufelblatt in Berührung ist.

5. Vorrichtung nach Anspruch 4, dadurch gekennzeichnet, daß die Länge des Schaufelrades (4) im wesentlichen der Breite der Aufnahmevorrichtung (3) entspricht.

6. Vorrichtung nach einem der Ansprüche 4 und 5, dadurch gekennzeichnet, daß das Ende der Platte (6), welches mit jeder Schaufel des Schaufelrades (4) in Berührung kommt, zur Bildung eines Berührungskamms (7) mit Zähnen versehen ist.

7. Vorrichtung nach Anspruch 6, dadurch gekennzeichnet, daß der Berührungskamm eine Ebene bildet, die mit der durch die Rotationsachse (5) des Schaufelrades (4) und eine Schaufel des Schaufelrades (4) gebildete Ebene zusammenfällt, wenn das Ende des Schaufelblattes in Kontakt mit dem Kamm kommt.

8. Vorrichtung nach einem der Ansprüche 4 bis 7, dadurch gekennzeichnet, daß sie zwei Platten (6) und (6') aufweist, die derart angeordnet sind, daß ihre Enden, die mit den Schaufeln des Schaufelrades (4) in Berührung kommen, nacheinander von den Enden der Schaufeln des Schaufelrades angestoßen werden.

9. Vorrichtung nach Anspruch 8, dadurch gekennzeichnet, daß, während das Ende der einen Platte (6) in Berührung mit einer Schaufel des Schaufelrades ist, das Ende der anderen Platte (6'), das mit den Schaufeln des Schaufelrades in Berührung kommt, in gleichem Abstand zwischen zwei Schaufeln des Schaufelrades (4) gelegen ist.

10. Vorrichtung nach einem der Ansprüche 8 und 9, dadurch gekennzeichnet, daß die Enden der Platten (6) und (6'), die in Kontakt mit den Schaufeln des Schaufelrades (4) geraten, beidseitig des Schaufelrades (4) gelegen sind.

11. Vorrichtung nach einem der Ansprüche 4 und 10, dadurch gekennzeichnet, daß sie außerdem einen Flaschenhals oberhalb des Schaufelrades (4) aufweist.

12. Vorrichtung nach einem der Ansprüche 4 bis 11, dadurch gekennzeichnet, daß das Filter (1) aus einem weichen Tuch aus synthetischem Gewebe gebildet ist, das von einem metallischen Blech mit Maschen, die größer als die im weichen Tuch sind, unterstützt ist.

13. Anwendung des Verfahrens nach einem der Ansprüche 1 bis 3 und der Vorrichtung nach einem der Ansprüche 4 bis 12 zur Filtration von wässrigen Kohlesuspensionen.

Fig. _1_

Fig. _2 _

Coupe X–Y

*Fig. _3_*

W

23   22

6'

11   10

26 27 28 29 30 31 32 33 34 35 36 37

Z

*Fig. _4_*

6'

38   7'

*Fig. _5_*

18
24   25
5
11   10
8   14

2